# EUROPÄISCHE PATENTANMELDUNG

(11) **EP 2 963 324 A1**
(43) Veröffentlichungstag der Anmeldung: **06.01.2016**
(21) Anmeldenummer: 15174406.7
(22) Anmeldetag: 29.06.2015
(51) Int. Cl.: F16L 23/14, F24F 13/02

(54) **FLANSCHPROFIL ZUM DICHTEN VERBINDEN VON KANALABSCHNITTEN FÜR GASFÖRMIGE MEDIEN**

(30) Priorität: 30.06.2014 DE 102014109129
(71) Anmelder: Dravenau, Paul, 10119 Berlin (DE)
(72) Erfinder: Dravenau, Paul, 10119 Berlin (DE)
(74) Vertreter: PATERIS Patentanwälte PartmbB

(57) **Zusammenfassung**

Es wird ein Flanschprofil zum dichten Verbinden von Kanalteilstücken zur Verfügung gestellt. Das Flanschprofil (3A, 3B) weist ein erstes Flanschende (7) und ein zweites Flanschende (8) auf, zwischen denen sich ein Flanschkörper (9) erstreckt, der im Profilquerschnitt einen ersten Schenkel (11A, 11B) und zweiten Schenkel (13), der mit dem ersten Schenkel (11A, 11 B) über einen Winkelabschnitt (15) derart verbundenen, dass der erste Schenkel (11A, 11B) und der zweite Schenkel (13) einen Winkel (α) einschließen. Der erste Schenkel (11A, 11B) weist eine an den Flanschenden (7, 8) offene Kammer (17) auf, die von einer sich zwischen den Flanschenden (7, 8) erstreckenden ersten Kammerwand (19), einer sich zwischen den Flanschenden (7, 8) erstreckenden und der ersten Kammerwand (19) gegenüber liegenden zweiten Kammerwand (21A, 21B) und einer von der ersten Kammerwand (19) zu der zweiten Kammerwand (21A, 21 B) erstreckenden Stirnwand (23) begrenzt wird, wobei an der vom Inneren der Kammer (17) weg weisenden Seite der zweiten Kammerwand (21A, 21B) eine Stoßfläche (37) ausgebildet ist. Der zweite Schenkel (13) weist eine vom Winkelabschnitt (15) ausgehende, zur zweiten Kammerwand (21A, 21B) senkrecht verlaufende und sich zwischen den Flanschenden (7, 8) erstreckende erste Wand (31), eine vom Winkelabschnitt (15) ausgehende und sich zwischen den Flanschenden (7, 8) erstreckende zweite Wand (33) sowie einen zwischen der ersten Wand (31) und der zweiten Wand (33) gebildete Aufnahme (29) auf. An dem vom Winkelabschnitt (15) entfernten Ende des ersten zweiten Schenkels (13) ist Aufnahme (29) offen. Die zweite Kammerwand (21A, 21 B) weist wenigstens eine in der Stoßfläche (37) in Richtung auf das Innere der Kammer (17) hin ausgebildete Nut (39,) auf und/oder die zweite Kammerwand (21A, 21 B) weist wenigstens einen in der Stoßfläche (37) über die Stoßfläche (37) vorstehenden Vorsprung (43) auf. Eine Dichtmasse (41) ist in die Nut (39) eingebracht ist und/oder eine Dichtmasse (41) ist auf den Vorsprung (43, 43A, 43B) aufgebracht.

## Beschreibung

Die vorliegende Erfindung betrifft ein Flanschprofil sowie ein Flanschprofileset zum luftdichten Verbindung von Luftkanalabschnitten.

Kanäle für gasförmige Medien kommen oft als Luftkanäle zum Einsatz Diese werden typischerweise auf Luftkanalteilstücken montiert, die häufig einen rechteckigen Luftkanalquerschnitt aufweisen und aus einer Blechbahn gefalzt sind. Zum Verbinden zweier Luftkanalteilstücke wird jedes Luftkanalteilstück dadurch vorbereitet, dass im Stoßbereich der Teilstücke Verbindungsrahmen an den Stoßkanten der Luftkanalteilstücke angebracht werden. Diese Verbindungsrahmen sind in der Regel jeweils aus vier Flanschprofilen und vier Eckwinkeln aufgebaut, wobei ein Eckwinkel in Kammern zweier Flansche eingeschoben ist, um die Flansche miteinander zu verbinden. Neben den Kammern weisen die Flanschprofile Aufnahmen auf, in die jeweils eine Stoßkante eines Luftkanalteilstückes eingeschoben wird, so dass sich ein an die Stoßkante anschließender Wandabschnitt im Inneren der Aufnahme befindet. Diese Wandabschnitte werden dann mit Hilfe eines Punktschweißverfahrens oder mit Hilfe eines Durchsetzfügeverfahrens (Clinchverfahrens) mit den Flanschprofilen verbunden. Die so vorbereiteten Luftkanalteilstücke werden mit den Flanschprofilen derart einander gegenüberliegend angeordnet, dass in den Flanschprofilen der Verbindungsrahmen ausgebildete Stoßflächen einander gegenüber liegen. An den Eckwinkeln werden die Verbindungsrahmen dann miteinander verschraubt. Beispiele für Verbindungsrahmen und Flanschprofile sind in WO 2010/099942 A2, DE 43 03 150 A1, DE 35 12 669 A1 und DE 27 58 295 A1 beschrieben, Beispiele für Eckwinkel in WO 2010/099942 A2 und in DE 42 24 257 A1.

Um Luftdichtigkeit zwischen den Verbindungsrahmen herzustellen, werden beim Montieren des Luftkanals Dichtbänder (auch Vorlegebänder genannt) auf die Stoßflächen der Flanschprofile aufgebracht. Diese sollen ein Austreten von Luft aus Spalt zwischen den Stoßflächen aneinanderstoßender Verbindungsrahmen vermeiden. Im Bereich der miteinander verschraubten Eckwinkel erfolgt das Abdichten der aneinanderstoßenden Verbindungsrahmen durch Dichtkappen, die auf die Eckwinkel aufgeschoben werden. Das Abdichten der Stoßflächen der Flanschprofile ist in DE 35 12 669 A1 beschrieben, eine Dichtkappe zum Abdichten der Verbindungsrahmen im Bereich der Eckwinkel in WO 2010/099942 A2.

Im Lichte des beschriebenen Standes der Technik ist es eine Aufgabe der vorliegenden Erfindung ein vorteilhaftes Flanschprofil sowie ein vorteilhaftes Flanschprofileset zur Verfügung zu stellen.

Diese Aufgabe wird durch ein Flanschprofil nach Anspruch 1 bzw. ein Flanschprofileset nach Anspruch 6 gelöst. Die abhängigen Ansprüche enthalten vorteilhafte Ausgestaltungen der Erfindung.

Ein erfindungsgemäßes Flanschprofil zum Verbinden von Kanalteilstücken für gasförmige Medien, insbesondere zum Verbinden von Luftkanalteilstücken, weist ein erstes Flanschende und ein zweites Flanschende auf, zwischen denen sich ein Flanschkörper erstreckt, der im Profilquerschnitt einen ersten Schenkel und zweiten Schenkel aufweist. Der erste Schenkel ist mit dem zweiten Schenkel über einen Winkelabschnitt derart verbundenen, dass der erste Schenkel und der zweite Schenkel im Profilquerschnitt einen Winkel einschließen, insbesondere einen rechten Winkel. Zudem weist der erste Schenkel eine an dem ersten Flanschende und an dem zweiten Flanschende offene Kammer auf, die von einer sich vom ersten Flanschende zum zweiten Flanschende erstreckenden und die Kammer in Richtung auf den eingeschlossenen Winkel begrenzenden ersten Kammerwand, einer sich vom ersten Flanschende zum zweiten Flanschende erstreckenden und der ersten Kammerwand gegenüber liegenden zweiten Kammerwand und einer von der ersten Kammerwand zu der zweiten Kammerwand erstreckenden Stirnwand begrenzt wird, wobei an der vom Inneren der Kammer weg weisenden Seite der zweiten Kammerwand eine Stoßfläche ausgebildet ist. Der zweite Schenkel weist eine vom Winkelabschnitt ausgehende, im Profilquerschnitt zur Kammerwand im Wesentlichen senkrecht verlaufende und sich vom ersten Flanschende zum zweiten Flanschende erstreckende erste Wand, eine vom Winkelabschnitt ausgehende und sich vom ersten Flanschende zum zweiten Flanschende erstreckende zweite Wand sowie eine zwischen der ersten Wand und der zweiten Wand gebildete Aufnahme auf. An dem vom Winkelabschnitt entfernten Ende des zweiten Schenkels ist diese Aufnahme offen. Im erfindungsgemäßen Flanschprofil weist die zweite Kammerwand in der Stoßfläche wenigstens eine in Richtung auf das Innere der Kammer hin ausgebildete Nut auf und/oder die zweite Kammerwand weist in der Stoßfläche wenigstens einen über die Stoßfläche vorstehenden Vorsprung auf. In die Nut ist eine Dichtmasse Nut eingebracht. Alternativ oder zusätzlich ist eine Dichtmasse auf den Vorsprung aufgebracht. Die Dichtmasse kann insbesondere in die Nut eingespritzt oder eingegossen sein und/oder als Beschichtung auf den Vorsprung aufgebracht sein. Sowohl ein Einspritzen oder Eingießen als auch ein Beschichten erlauben eine hohe Automatisierung und damit ein kostengünstiges Herstellen des erfindungsgemäßen Flanschprofils.

Das erfindungsgemäße Flanschprofil ermöglicht es, ein erfindungsgemäßes Flanschprofileset zur Verfügung zu stellen, in dem wenigstens ein erstes erfindungsgemäßes Flanschprofil vorhanden ist, in welchem die zweite Kammerwand in der Stoßfläche eine in Richtung auf das Innere der Kammer hin ausgebildete Nut aufweist, und wenigstens ein zweites erfindungsgemäßes Flanschprofil vorhanden ist, in dem die zweite Kammerwand in der Stoßfläche einen über die Kammerwand vorstehenden Vorsprung aufweist. Dabei sind die Abmessungen des Vorsprungs in der zweiten Kammerwand des zweiten Flanschprofiles derart an die Abmessungen der Nut in der zweiten Kammerwand des ersten Flanschprofiles angepasst, dass der Vorsprung in die Nut eingreift, wenn das erste Flanschprofil und das zweite Flanschprofil Stoßfläche an Stoßfläche zueinander angeordnet sind.

Mit Hilfe eines derartigen Flanschprofilesets lässt sich der Arbeitsaufwand beim Herstellen einer dichten Verbindung zwischen zwei Stoßfläche an Stoßfläche zueinander angeordneten Flanschen verringern. Im Stand der Technik wird, wie eingangs beschrieben, während der Montage eines Luftkanals, das heißt während des Verbindens zweier Luftkanalteilstücke mit Hilfe von Flanschprofile umfassenden Verbindungsrahmen, Dichtbänder auf die Stoßflächen Flanschprofile aufgebracht. Nach dem Aufbringen der Dichtbänder werden die an den Luftkanalteilstücken angebrachten Verbindungsrahmen mit den Stoßflächen der Flanschprofile aneinanderstoßend angeordnet, und die Verbindungsrahmen werden über an den Flanschenden in die Kammern der Flanschprofile eingeschobene Eckwinkel miteinander verschraubt. Das Aufbringen der Dichtbänder auf die Stoßflächen während der Montage erfolgt manuell und ist damit eine personalintensive und damit kostentreibende Arbeit.

Mit dem erfindungsgemäßen Flanschwinkelset, in dem in der Nut und/oder auf dem Vorsprung ein Dichtmaterial aufgebracht ist, kann der Arbeitsschritt des Aufbringens des Dichtbandes während der Montage entfallen, so dass der Personalaufwand bei einer Montage verringert werden kann. Das Einbringen des Dichtmaterials in die Nut bzw. das Aufbringen des Dichtmaterials auf den Vorsprung kann dagegen maschinell während der Herstellung der Flansche erfolgen, so dass damit kein erheblicher Mehraufwand verbunden ist.

Es ist vorteilhaft, wenn die Dichtmasse in die Nut eingebracht ist. In diesem Fall ist die Dichtmasse nämlich gegen Beschädigungen geschützt, beispielsweise wenn die Flansche auf einem unebenen Untergrund gelagert werden oder die Flansche während der Montage über den Boden schleifen.

Bei der Montage kann der Vorsprung in der Stoßfläche eines Flanschprofils in die in die Nut in der Stoßfläche eines anderen Flanschprofils eingebrachte Dichtmasse, die vorzugsweise plastisch oder elastisch verformbar ist, eindrücken, so dass sich die Dichtmasse an die Oberfläche des Vorsprungs anschmiegt und so für eine gute Dichtwirkung sorgt. Wenn die plastisch oder elastisch verformbare Dichtmasse statt in die Nut eingebracht auf den Vorsprung aufgebracht ist, schmiegt sich die Dichtmasse an den Boden der Nut an. Es versteht sich, dass die Dichtmasse in der Nut bzw. auf dem Vorsprung eine gewisse Mindestdicke aufweisen muss, damit der Vorsprung und die Nut die Dichtmasse beim Eingriff des Vorsprungs in die Nut plastisch bzw. elastisch verformen kann. Die zu verwendende Dicke der Dichtmasse hängt dabei im Wesentlichen von dem Spaltmaß zwischen dem Boden der Nut und der Oberfläche des Vorsprungs, wenn die Flanschprofile derart Stoßfläche an Stoßfläche zueinander angeordnet sind, dass der Vorsprung in die Nut eingreift, ab.

Um ein erfindungsgemäßes Flanschprofil auch bei Kanälen, die ein gasförmiges Medium wie etwa Luft mit erhöhter Temperatur leiten, verwenden zu können, ist es vorteilhaft, wenn die Dichtmasse wenigstens bis zu einer Temperatur von 100 Grad Celsius temperaturbeständig ist.

Im erfindungsgemäßen Flanschprofil kann der Boden der Nut und/oder kann die Oberseite des Vorsprungs mit sich von ersten Flanschende zum zweiten Flanschende erstreckenden Rippen versehen sein, die über den Boden der Nut bzw. über die Oberfläche des Vorsprungs vorstehen und einen sägezahnförmigen Querschnitt aufweisen. Eine derartige Ausgestaltung des Bodens der Nut bzw. der Oberfläche des Vorsprungs bietet zweierlei Vorteile. Zum einen kann dadurch aufgrund der Vergrößerung der Grenzfläche zwischen der Dichtmasse und der Nut bzw. dem Vorsprung die Haftung der Dichtmasse in der Nut bzw. auf dem Vorsprung verbessert werden. Zum anderen können Rippen auf einer nicht mit Dichtmasse versehenen Oberfläche beim Eingriff des Vorsprungs in die Nut in die Dichtmasse eindrücken, so dass die Dichtwirkung erhöht werden kann.

Im erfindungsgemäßen Flanschprofileset ist es insbesondere vorteilhaft, wenn eine plastisch oder elastisch verformbare Dichtmasse in die Nut des ersten Flanschprofiles eingebracht ist und die Abmessungen des über die Kammerwand vorstehenden Vorsprungs des zweiten Flanschprofils derart ausgestaltet sind, dass der Vorsprung die Dichtmasse plastisch oder elastisch verformt, wenn er in die Nut in der zweiten Kammerwand des ersten Flanschprofiles eingreift. Durch das Einbringen der Dichtmasse in die Nut ist diese während der Montage vor Beschädigungen, beispielsweise dadurch, dass ein Flanschprofil über den Boden gezogen wird, gut geschützt. In dieser Ausgestaltung ist es zum Erhöhen der Dichtwirkung zudem vorteilhaft, wenn die Oberseite des Vorsprungs der Stoßfläche des zweiten Flanschprofiles mit sich zwischen den Flanschenenden erstreckenden Rippen versehen ist, die über die Oberfläche des Vorsprungs vorstehen und einen sägezahnförmigem Querschnitt aufweisen.

In einer Weiterbildung des erfindungsgemäßen Flanschprofilesets weist die zweite Kammerwand des ersten Flanschprofils in der Stoßfläche wenigstens sowohl einen über die Stoßfläche vorstehenden Vorsprung als auch eine in Richtung auf das Innere der Kammer ausgebildete Nut auf. Ebenso weist die zweite Kammerwand des zweiten Flanschprofils in der Stoßfläche wenigstens sowohl einen über die Stoßfläche vorstehenden Vorsprung als auch eine in Richtung auf das Innere der Kammer ausgebildete Nut auf. Der Vorsprung und die Nut der zweiten Kammerwand des zweiten Flanschprofiles sind dabei derart komplementär zu dem Vorsprung und der Nut der zweiten Kammerwand des ersten Flanschprofiles ausgebildet, dass der Vorsprung der zweiten Kammerwand des ersten Flanschprofiles in die Nut der zweiten Kammerwand des zweiten Flanschprofiles eingreift und der Vorsprung der zweiten Kammerwand des zweiten Flanschprofiles in die Nut der zweiten Kammerwand des ersten Flanschprofiles eingreift, wenn das erste Flanschprofil und das zweite Flanschprofil Stoßfläche an Stoßfläche zueinander angeordnet sind. Auf diese Weise lässt sich der Strömungspfad für das gasförmige Medium zwischen den Stoßflächen im Falle eines Lecks vergrößern, so dass der Strömungswiderstand erhöht und die Leckage verringert wird. Je höher die Zahl der Vorsprünge und Nuten ist, desto höher wird dabei der Strömungswiderstand.

In dem erfindungsgemäßen Flanschprofileset kann die Dichtmasse zwei Komponenten umfassen, welche bei Kontakt eine stoffschlüssige Verbindung ausbilden. Die eine Komponente der Dichtmasse ist dann bspw. in die wenigstens eine Nut der Stoßfläche des ersten Flanschprofils eingebracht, und die zweite Komponente der Dichtmasse ist auf den wenigstens einen Vorsprung der Stoßfläche des zweiten Flanschprofils aufgebracht. Falls in den Stoßflächen des ersten und des zweiten Flanschprofiles jeweils sowohl wenigstens ein Vorsprung als auch wenigstens eine Nut vorhanden sind, kann die eine Komponente der Dichtmasse in die wenigstens eine Nut des ersten Flanschprofiles und die wenigstens eine Nut des zweiten Flanschprofiles eingebracht sein. Die zweite Komponente ist dann auf den wenigstens einen Vorsprung des ersten Flanschprofiles und den wenigstens einen Vorsprung des zweiten Flanschprofiles aufgebracht. Alternativ besteht die Möglichkeit, die eine Komponente der Dichtmasse in die wenigstens eine Nut und auf den wenigstens einen Vorsprung der Stoßfläche des ersten Flanschprofiles ein- bzw. aufgebracht sein. Die zweite Komponente der Dichtmasse ist dann die wenigstens eine Nut und auf den wenigstens einen Vorsprung der Stoßfläche des zweiten Flanschprofiles ein- bzw. aufgebracht.

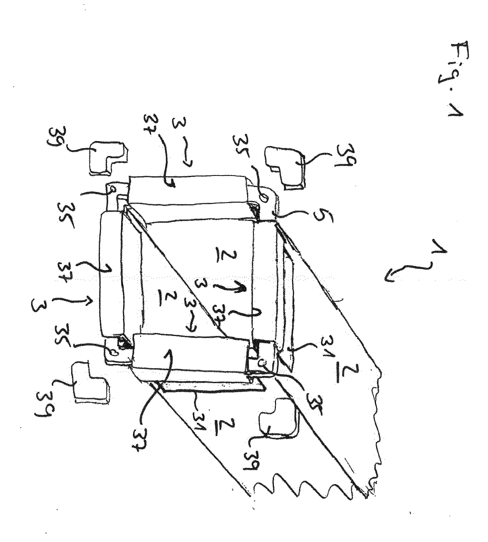

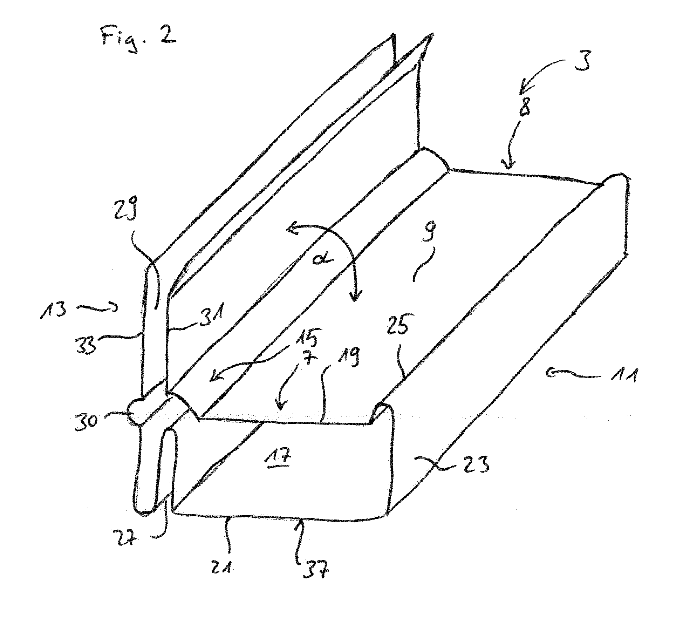

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.
- Figur 1: zeigt in einer perspektivischen Ansicht ein Luftkanalteilstück gemäß Stand der Technik mit einem daran angeordneten Verbindungsrahmen.
- Figur 2: zeigt in einer perspektivischen Ansicht ein Flanschprofil, das im Verbindungsrahmen aus Figur 1 Verwendung findet.
- Figur 3: zeigt ein erstes Ausführungsbeispiel für ein Flanschprofileset mit zwei zueinander komplementären Flanschprofilen in einer perspektivischen Darstellung.
- Figur 4: zeigt ein zweites Ausführungsbeispiel für ein Flanschprofileset mit zwei zueinander komplementären Flanschprofilen in einer Querschnittsansicht.
- Figur 5: zeigt ein dritts Ausführungsbeispiel für ein Flanschprofileset mit zwei zueinander komplementären Flanschprofilen in einer Querschnittsansicht.
- Figur 6: zeigt ein viertes Ausführungsbeispiel für ein Flanschprofileset mit zwei zueinander komplementären Flanschprofilen in einer Querschnittsansicht.
- Figur 7: zeigt ein fünftes Ausführungsbeispiel für ein Flanschprofileset mit zwei zueinander komplementären Flanschprofilen in einer Querschnittsansicht.
Bevor die erfindungsgemäßen Flanschprofile bzw. erfindungsgemäßen Flanschprofilesets anhand von Ausführungsbeispielen näher erläutert werden, wird mit Bezug auf die Figuren 1 und 2 das Prinzip der Verbindung zweier Luftkanalteilstücke mit Hilfe von Flanschprofilen nach Stand der Technik beschrieben.

Das in Figur 1 gezeigte Luftkanalteilstück 1 besteht aus zu einem Kanal mit rechteckigem Querschnitt gefalzten Blechwänden 2, an deren Enden (von denen in Figur 1 nur eines dargestellt ist) einen Verbindungsrahmen zum Verbinden mit einem ebenfalls einen Verbindungsrahmen aufweisenden weiteren Luftkanalteilstück angebracht ist. Der Verbindungsrahmen ist aus Flanschprofilen 3 und Eckwinkeln 5 aufgebaut.

Ein Ausschnitt aus einem Flanschprofil 3 nach Stand der Technik ist in Figur 2 dargestellt. Das Flanschprofil 3 besteht aus einem Flanschkörper 9, der sich zwischen einem ersten Flanschende 7 und einem zweiten Flanschende 8 erstreckt. Der Flanschkörper 9 weist im Profilquerschnitt einen ersten Schenkel 11 und einen zweiten Schenkel 13 auf. Diese sind über einen Winkelabschnitt 15 derart miteinander verbunden, dass der erste Schenkel 11 und der zweite Schenkel 13 im Profilquerschnitt des Flanschkörpers 9 einen Winkel α einschließen, der im Wesentlichen ein rechter Winkel ist.

Das Flanschprofil 3 ist durch Biegen und Falzen aus einem Blechstreifen geformt und ist an seinen Flanschenden offen, wie in Figur 2 am ersten Flanschende 7 zu erkennen ist. Im ersten Schenkel 11 ist eine Kammer 17 ausgebildet, die von einer die Kammer in Richtung auf den eingeschlossenen Winkel α begrenzenden ersten Kammerwand 19, einer in einem Abstand von der ersten Kammerwand 19 angeordneten zweiten Kammerwand und einer die erste Kammerwand mit der zweiten Kammerwand verbindenden Stirnwand 23 begrenzt. Die vom Kammerinneren weg weisende Außenseite der zweiten Kammerwand 21 bildet eine Stoßfläche des Flanschprofils 3. Im Übergangsbereich der Stirnwand 23 zur ersten Kammerwand 19 ist zur Stabilisierung des ersten Schenkels 11 zudem ein sich vom ersten Flanschende 7 zum zweiten Flanschende 8 erstreckender Wulst 25 ausgeformt.

Zum Winkelabschnitt 15 hin wird die Kammer 17 im Wesentlichen durch eine in der zweiten Kammerwand 21 ausgebildete tiefe Sicke 27 begrenzt. In die Kammer 17 wird bei der Montage des Rahmens ein Schenkel eines Eckwinkels eingeschoben.

Der zweite Schenkel 13 des Flanschprofiles 3 bildet eine Aufnahme 29 für einen Abschnitt der Blechwand 2 eines Luftkanalteilstückes. Die Aufnahme 29 ist zwischen einer ersten, die Aufnahme in Richtung auf den zwischen den Schenkeln eingeschlossenen Winkel α begrenzende Wand 31 und einer zweiten Wand 33, die im Wesentlichen parallel zur ersten Wand 31 verläuft, ausgebildet. Die erste Wand 31 und die zweite Wand 33 verlaufen im Profilquerschnitt im Wesentlichen im rechten Winkel zur zweiten Kammerwand 21 des ersten Schenkels 11. Um ein Einschieben der Blechwand eines Luftkanalteilstückes in die Aufnahme 29 zu ermöglichen, ist diese an dem vom Winkelabschnitt 15 entfernten Ende offen. Mittels der im Bereich des Übergangs vom ersten Schenkel zum zweiten Schenkel in der zweiten Wand 21 des ersten Schenkels 11 angeordneten tiefen Sicke 27 wird nicht nur die Kammer 17 im ersten Schenkel begrenzt, sondern auch die Aufnahme 29 in den Winkelabschnitt 15 verlängert.

In der zweiten Wand 33 des zweiten Schenkels 13 ist zudem eine vom ersten Flanschende 7 zum zweiten Flanschende 8 verlaufende rinnenförmige Aufweitung 30 der Aufnahme 29 ausgeformt, in die typischerweise ein Dichtmaterial eingebracht wird, wie dies bspw. in WO 2010/099942 A2 gezeigt ist.

Zur Montage eines Verbindungsrahmens werden vier Eckwinkel 5 in die Kammern von vier Flanschprofilen 3 eingesteckt, um die vier Flanschprofile 3 zu einem Verbindungsrahmen zusammenzusetzen. Der so zusammengesetzte Verbindungsrahmen wird dann so auf die Blechwände 2 des Luftkanalteilstückes 1 aufgeschoben, dass die Blechwände 2 von den Aufnahmen 29 der zweiten Schenkel 13 der Flanschprofile 3 aufgenommen werden. Sodann werden die ersten Wände 31 und die zweiten Wände 33 der zweiten Schenkel 13 der Flanschprofile 3 mit Hilfe eines Punktschweißens mit den in den Aufnahmen 29 aufgenommenen Luftkanalwänden 2 verbunden. Ein so vorbereitetes Luftkanalteilstück wird mit einem zweiten Luftkanalteilstück, das in analoger Weise vorbereitet worden ist, derart verbunden, dass die Stoßflächen 37 der Flanschprofile 3 in den Verbindungsrahmen einander gegenüber liegen, wobei die Verbindungsrahmen über die Eckwinkel, die mit Löchern 35 für Schrauben versehen sind, miteinander verschraubt werden. Vor dem Verbinden der beiden Luftkanalteilstücke werden Dichtbänder auf die Stoßflächen 37 der Flanschprofile des einen Verbindungsrahmens aufgebracht, um ein Ausströmen von Luft aus den miteinander verbundenen Luftkanalteilstücken zwischen den einander gegenüberliegenden Stoßflächen 37 zu unterbinden. Ebenfalls, um ein Ausströmen von Luft durch die Verbindung zwischen zwei Luftkanalteilstücken 1 zu unterbinden, werden nach dem Verschrauben der beiden Rahmen Dichtkappen 39 auf die Eckwinkel aufgesetzt.

Dadurch, dass beim Verbinden zweier Luftkanalteilstücke jeweils mindestens die Stoßflächen eines Rahmens von Hand mit den Dichtsbändern versehen werden müssen, ist das Verbinden von Luftkanalteilabschnitten zeit- und personalaufwändig.

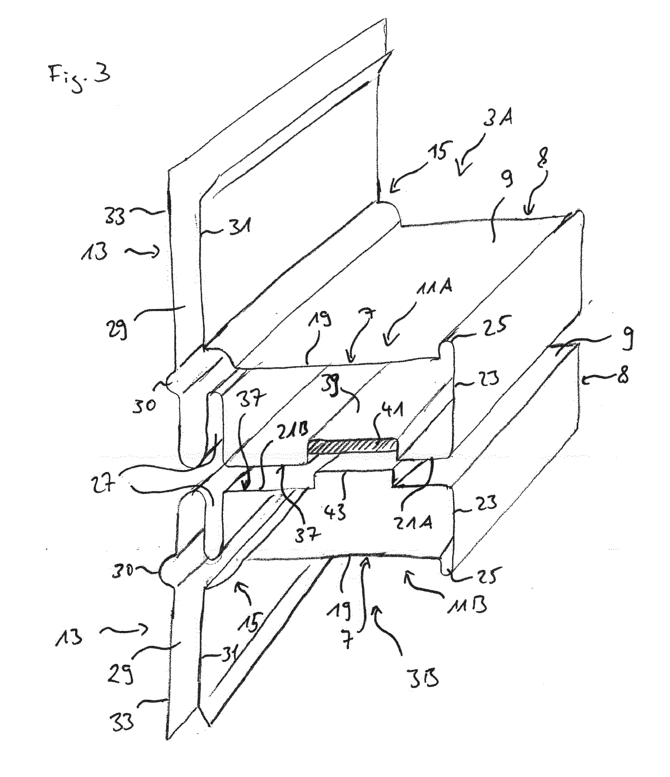

Mit Hilfe eines erfindungsgemäßen Flanschprofilesets kann der Arbeitsschritt des Aufbringens des Dichtbandes auf die Stoßflächen eines Verbindungsrahmens entfallen. Ein erstes Ausführungsbeispiel für ein erfindungsgemäßes Flanschprofileset ist in Figur 3 in einer perspektivischen Darstellung gezeigt. Merkmale der Flanschprofile des Flanschprofilesets, die Merkmalen des Flanschprofils 3 aus Figur 2 entsprechen, sind in Figur 3 (und in allen weiteren Figuren) mit denselben Bezugsziffern wie in Figur 2 bezeichnet und werden nicht noch einmal erläutert, um Wiederholungen zu vermeiden. Die Beschreibung der Ausführungsbeispiele für das erfindungsgemäße Flanschprofileset beschränkt sich daher auf die Beschreibung der Unterschiede zu einem Flanschprofil, wie es in Figur 2 gezeigt ist.

Das Flanschprofileset aus Figur 3 unterscheidet sich von dem in Figur 2 dargestellten Flanschprofil im Wesentlichen dadurch, dass es zwei zueinander komplementär ausgebildete Flanschprofile 3A, 3B umfasst. In dem einen der beiden komplementären Flanschprofile 3A ist in der die Stoßfläche 37 bildenden zweiten Wand 21A des ersten Schenkels 11A eine Nut 39 gebildet, in die ein Dichtmaterial 41 eingebracht, beispielsweise eingespritzt oder eingegossen ist.

Das andere Flanschprofil 3B des Flanschprofilesets weist in der zweiten Wand 21B des ersten Schenkels 11B einen über die Stoßfläche 37 vorstehenden Vorsprung 43 auf. Die Abmessungen dieses Vorsprungs 43 sind so gewählt, dass dieser in die Nut 41 des ersten Flanschprofils 3A eingreift, wenn das erste Flanschprofil 3A und das zweite Flanschprofil 3B Stoßfläche an Stoßfläche zueinander angeordnet werden, wie dies der Fall ist, wenn mit aus den Flanschprofilen aufgebauten Verbindungsrahmen versehene Luftkanalteilstücke über die Eckwinkel des Rahmens miteinander verschraubt werden.

Das Dichtmaterial 41 in der Nut 39 ist ein plastisch verformbares Dichtmaterial oder ein elastisch verformbares Dichtmaterial. Beim Eingriff in die Nut 39 verformt der Vorsprung 43 das Dichtmaterial 41 plastisch oder elastisch, so dass sich das Dichtmaterial 41 an die Oberfläche des Vorsprungs 43 dichtend anschmiegt.

Zum Herstellen einer Verbindung zwischen zwei Luftkanalteilstücken wird mit Hilfe eines erfindungsgemäßen Flanschprofilesets der Rahmen des einen Luftkanalteilstückes aus den ersten, mit den Nuten 39 und dem Dichtmaterial 41 versehenen Flanschprofilen 3A gebildet, wohingegen der Rahmen des zweiten Luftkanalteilstückes aus zweiten, mit den Vorsprüngen 43 versehenen Flanschprofilen 3B gebildet wird.

Da die Nuten in den ersten Flanschprofilen 3A bereits mit einem Dichtmaterial versehen sind, entfällt beim Verbinden zweier Luftkanalteilstücke der Schritt des Aufbringens des Dichtbandes, so dass der Arbeitsaufwand bei der Montage von Luftkanälen verringert wird. Das Einspritzen oder Eingießen des Dichtmaterials in die Nut ist dagegen voll automatisiert beim Herstellen der Flanschprofile möglich, so dass der Aufwand beim Herstellungsprozess nicht wesentlich erhöht wird. Mit dem erfindungsgemäßen Flanschprofileset können daher die Kosten für die Montage von Luftkanälen gesenkt werden.

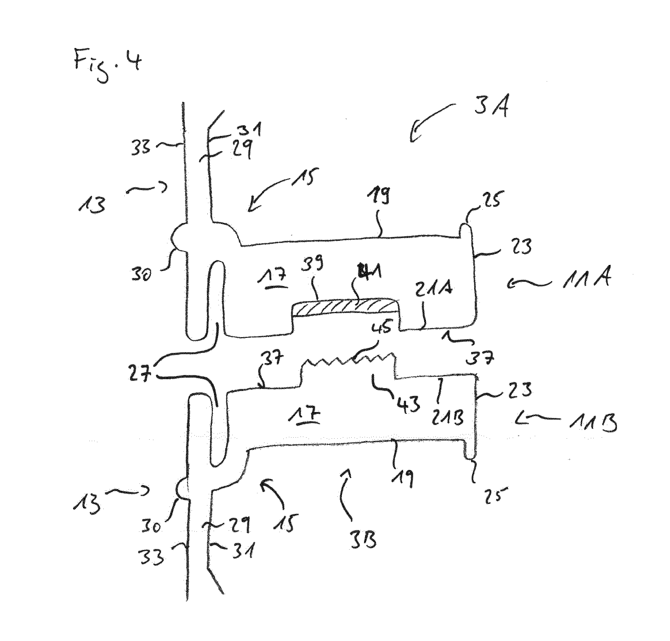

Ein zweites Ausführungsbeispiel für ein erfindungsgemäßes Flanschprofileset ist in Figur 4 schematisch in einer Querschnittsansicht dargestellt. Das Flanschprofileset des zweiten Ausführungsbeispiels unterscheidet sich vom Flanschprofileset des ersten Ausführungsbeispiels lediglich dadurch, dass die Oberseite des Vorsprungs 43 in der Stoßfläche 37 des zweiten Flanschprofiles 3B mit Rippen versehen ist, die sich vom ersten Flanschende 7 zum zweiten Flanschende 8 erstrecken und einen im Wesentlichen sägezahnförmigen Querschnitt aufweisen. Durch den sägezahnförmigen Querschnitt der Rippen 45 wird der Kontakt zwischen der Oberseite des Vorsprungs 43 und dem Dichtmaterial 41 verbessert. Insbesondere wird das Risiko einer Leckage verringert, da jede Rippe 45 wie eine Schneide wirkt, die sich in das Dichtmaterial 41 eindrückt. Damit ein Leckagepfad entstehen kann, muss an jeder Rippe ein individuelles Leck entstehen, was die Wahrscheinlichkeit, eines durchgehenden Leckagepfades verringert.

Obwohl in Figur 4 lediglich die Oberseite des Vorsprungs 43 mit Rippen 45 versehen ist, kann auch der Boden der Nut 39 mit Rippen versehen sein. Die Rippen im Nutboden können die Haftung des eingegossenen oder eingespritzten Dichtmaterials durch Vergrößerung der Kontaktfläche zwischen Dichtmaterial und Nutboden verbessern.

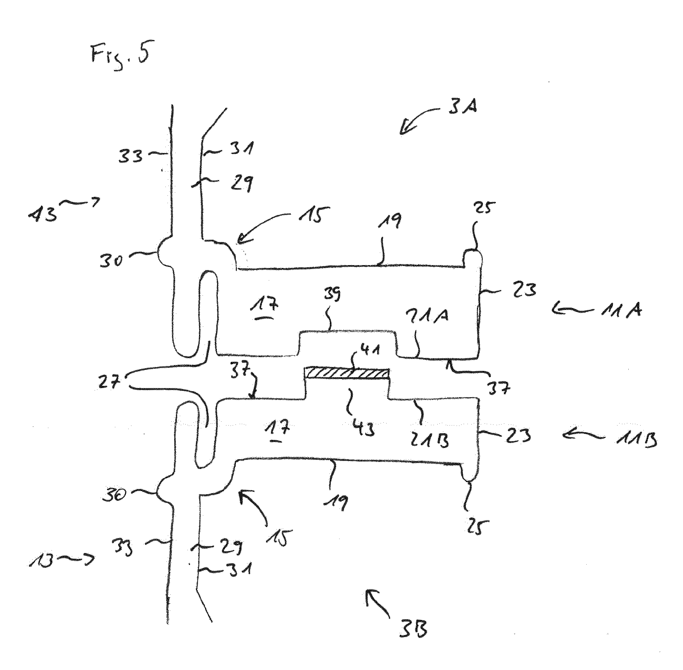

Ein drittes Ausführungsbeispiel für ein erfindungsgemäßes Flanschprofileset ist in Figur 5 schematisch in einer Querschnittsansicht dargestellt. Von dem Flanschprofileset aus Figur 3 unterscheidet sich das in Figur 5 dargestellte Flanschprofilset lediglich dadurch, dass das Dichtmaterial 41 auf die Oberseite des in der Stoßfläche 37 des zweiten Flanschprofiles 3B ausgebildeten Vorsprungs 43 aufgebracht ist. Beim Eingriff des Vorsprungs 43 in die in der Stoßfläche 37 des ersten Flanschprofiles 3A ausgebildete Nut 39 wird das plastisch oder elastisch verformbare Dichtmaterial 41 derart verformt, dass es sich an den Nutboden und gegebenenfalls an die Nutwände dichtend anschmiegt Das Aufbringen des Dichtmaterials 41 kann durch Beschichten oder durch Eintauchen des Vorsprungs in ein Dichtmaterialbad erfolgen.

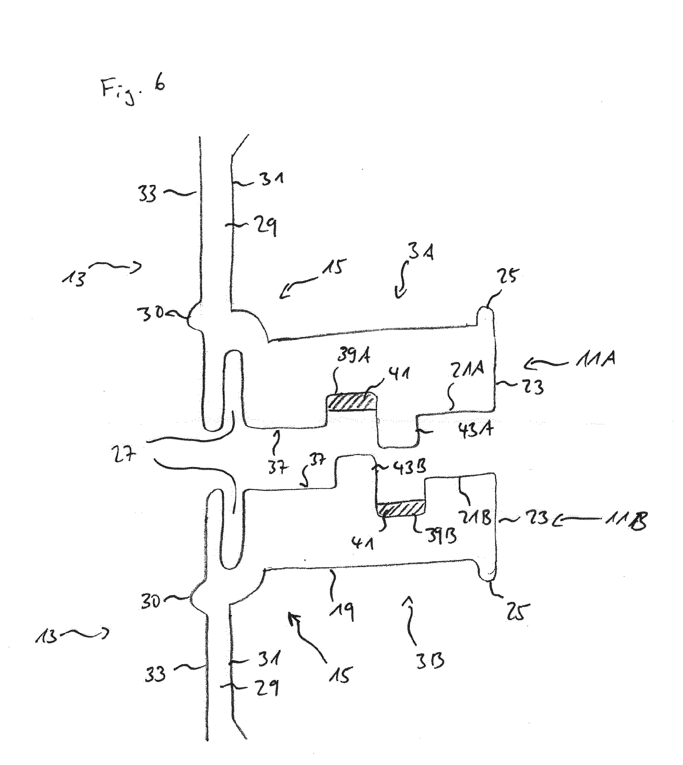

Eine vierte Ausführungsform für das erfindungsgemäße Flanschprofileset ist in Figur 6 dargestellt. Das Flanchprofileset des vierten Ausführungsbeispiels unterscheidet sich vom Flanschprofileset des in Figur 3 dargestellten ersten Ausführungsbeispiels dadurch, cass in den Stoßflächen 37 des ersten Flanschprofiles 3A und des zweiten Flanschprofiles 3B jeweils wenigstens eine Nut 39A, 39B und ein Vorsprung 43A, 43B gebildet sind. Die Anordnung der Nuten 39A, 39B und Vorsprünge 43A, 43B in den jeweiligen Stoßflächen ist dabei so gewählt, dass die wenigstens eine Nut 39B und der wenigstens eine Vorsprung 43B des zweiten Flanschprofiles 3B komplementär zur wenigstens einen Nut 39A undizum wenigstens einen Vorsprung 43A des ersten Flanschprofils 3A ausgebildet sind. In den Nuten 39A, 39B der beiden Flanschprofile 3A, 3B ist jeweils ein plastisch oder elastisch verformbares Dichtmaterial 41 vorhanden. Wenn die beiden Flanschprofile 3A, 3B Stoßfläche an Stoßfläche zueinander angeordnet werden, greifen die Vorsprünge 43A, 43B der beiden Flanschprofile 3A, 3B in die Nuten 39A, 39B des jeweils anderen Flanschprofiles 3B, 3A ein, wobei das darin befindliche Dichtmaterial plastisch oder elastisch verformt wird, so dass es sich dichtend an die Vorsprünge 43A, 43B anschmiegt.

Obwohl in Figur 6 lediglich dargestellt ist, dass sich das Dichtmaterial 41 in den Nuten 39A, 39B befindet, kann sich das Dichtmaterial 41 statt in den Nuten 39A, 39B auch auf den Volrsprungen 43A, 43B befinden. Außerdem ist es auch möglich, dass sich sowohl in den Nuten 39A, 39B als auch auf den Vorsprüngen 43A, 43B Dichtmaterial befindet. Entsprechendes gilt analog auch für die in den anderen Ausführungsbeispielen für das erfindungsgemäße Flanschprofileset gezeigten Flanschprofile.

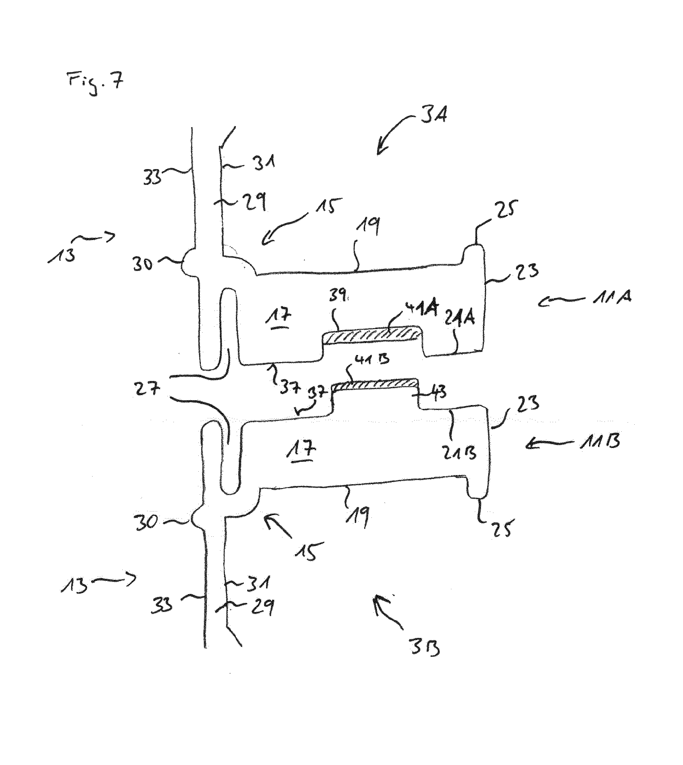

Ein fünftes Ausführungsbeispiel für ein erfindungsgemäßes Flanschprofileset ist in Figur 7 dargestellt. Dieses weist die geometrische Form des Flanschprofilesets des ersten Ausführungsbeispiels auf. Im Unterschied zum Flanschprofileset des ersten Ausführungsbeispiels ist das Dichtmaterial jedoch aus zwei Komponenten gebildet, von denen eine Komponente 41A in die in der Stoßfläche 37 des ersten Flanschprofiles 3A gebildete Nut 39 eingebracht ist und die zweite Komponente 41B auf den Vorsprung 43 in der Stoßfläche 37 des zweiten Flanschprofiles 3B aufgebracht ist. Wenn nun die beiden Flanschprofile 3A, 3B Stoßfläche an Stoßfläche zueinander angeordnet werden und der Vorsprung 43 in die Nut 39 eingreift, kommen die beiden Komponenten 41A, 41B des Dichtmaterials miteinander in Kontakt, wobei sie eine stoffschlüssige Verbindung ausbilden. Auf dies Weise wird eine dichte Verbindung zwischen der Oberfläche des Vorsprungs 43 und dem Boden der Nut 39 gebildet. Neben dem Dichteffekt bietet die Ausgestaltung mit einer zweikomponentigen Dichtmasse auch den Vorteil, dass die auf die Luftkanalteilstücke aufgesetzten Rahmen nicht nur über die Verschraubung im Bereich der Eckwinkel 5 kraftübertragend miteinander verbunden werden, sondern entlang der Stoßflächen 37.

Die vorliegende Erfindung wurde zu Erläuterungszwecken mit Bezug auf eine Anzahl von exemplarischen Ausführungsbeispielen erläutert. Wie bereits in den Ausführungsbeispielen beschrieben worden ist, können einzelne Merkmale der Ausführungsbeispiele miteinander kombiniert werden. So ist es beispielsweise möglich, nicht nur bei dem in Figur 7 dargestellten Ausführungsbeispiel, sondern auch bei den übrigen Ausführungsbeispielen eine zweikomponentige Dichtmasse zu verwenden, wie der Fachmann ohne Weiteres erkennen kann. In den mit Bezug auf die Figuren 3 und 5 beschriebenen Ausführungsbeispielen können in der Stoßfläche des ersten Flanschprofils statt einer Nut auch zwei oder mehr parallele Nuten ausgeformt sein. Das zweite Flanschprofil weist dann einen entsprechende Anzahl an parallelen Vorsprüngen auf. Ebenso ist in dem in Figur 6 dargestellten Ausführungsbeispiel die Zahl der Nuten und Vorsprünge nicht auf eine Nut und einen Vorsprung je Flanschprofil beschränkt. Grundsätzlich ist die Zahl der Vorsprünge und Nuten lediglich durch die Zahl der Vorsprünge und Nuten, die sich beim Falten der Flanschprofile realisieren lassen, beschränkt. Aus den genannten Gründen soll die Erfindung nicht auf Merkmalskombinationen der einzelnen Ausführungsbeispiele beschränkt sein, sondern lediglich durch die beigefügten Ansprüche.

## Patentansprüche

1. Flanschprofil zum dichten Verbinden von Kanalteilstücken für gasförmige Medien, wobei das Flanschprofil (3A, 3B) ein erstes Flanschende (7) und ein zweites Flanschende (8) aufweist, zwischen denen sich ein Flanschkörper (9) erstreckt, der im Profilquerschnitt einen ersten Schenkel (11A, 11B) und zweiten Schenkel (13) umfasst, wobei
- der erste Schenkel (11A, 11B) mit dem zweiten Schenkel (13) über einen Winkelabschnitt (15) derart verbundenen ist, dass der erste Schenkel (11A, 11B) und der zweite Schenkel (13) im Profilquerschnitt einen Winkel (α) einschließen,
- der erste Schenkel (11A, 11B) eine an den Flanschenden (7, 8) offene Kammer (17) aufweist, die von einer sich vom ersten Flanschende (7) zum zweiten Flanschende (8) erstreckenden und die Kammer (17) in Richtung auf den eingeschlossenen Winkel (α) begrenzenden ersten Kammerwand (19), einer sich vom ersten Flanschende (7) zum zweiten Flanschende (8) erstreckenden und der ersten Kammerwand (19) gegenüber liegenden zweiten Kammerwand (21A, 21B) und einer sich von der ersten Kammerwand (19) zu der zweiten Kammerwand (21A, 21B) erstreckenden Stirnwand (23) begrenzt wird, wobei an der vom Inneren der Kammer (17) weg weisenden Seite der zweiten Kammerwand (21A, 21B) eine Stoßfläche (37) ausgebildet ist,
- der zweite Schenkel (13) eine vom Winkelabschnitt (15) ausgehende, eine im Profilquerschnitt zur zweiten Kammerwand (21A, 21B) im Wesentlichen senkrecht verlaufende und sich vom ersten Flanschende (7) zum zweiten Flanschende (8) erstreckende erste Wand (31), eine vom Winkelabschnitt (15) ausgehende und sich vom ersten Flanschende (7) zum zweiten Flanschende (8) erstreckende zweite Wand (33) sowie einen zwischen der ersten Wand (31) und der zweiten Wand (33) gebildete Aufnahme (29) aufweist, die an dem vom Winkelabschnitt (15) entfernten Ende des ersten zweiten Schenkels (13) offen ist,
**dadurch gekennzeichnet, dass**
- die zweite Kammerwand (21A, 21B) wenigstens eine in der Stoßfläche (37) in Richtung auf das Innere der Kammer (17) hin ausgebildete Nut (39, 39A, 39B) aufweist und/oder die zweite Kammerwand (21A, 21 B) wenigstens einen in der Stoßfläche (37) über die Stoßfläche (37) vorstehenden Vorsprung (43, 43A, 43B) aufweist, und
- eine Dichtmasse (41, 41A, 41B) in die Nut (39, 39A, 39B) eingebracht ist und/oder eine Dichtmasse (41, 41A, 41B) auf den Vorsprung (43, 43A, 43B) aufgebracht ist.

2. Flanschprofil nach Anspruch 1, **dadurch gekennzeichnet, dass** die Dichtmasse (41) plastisch oder elastisch verformbar ist.

3. Flanschprofil nach Anspruch 1 oder Anspruch 2, **dadurch gekennzeichnet, dass** die Dichtmasse (41, 41A, 41B) bis wenigstens zu einer Temperatur von 100 Grad Celsius temperaturbeständig ist.

4. Flanschprofil nach einem der Ansprüche 1 bis 3, **dadurch gekennzeichnet, dass** der Boden der Nut (39) und/oder die Oberseite des Vorsprungs (43) mit sich vom ersten Flanschende (7) zum zweiten Flanschende (8) erstreckenden Rippen (45) versehen ist, die über den Boden der Nut (39) bzw. über die Oberfläche des Vorsprungs (43) vorstehen und einen sägezahnförmigem Querschnitt aufweisen.

5. Flanschprofil nach einem der Ansprüche 1 bis 4, **dadurch gekennzeichnet, dass** die Dichtmasse (41, 41A, 41 B) in die Nut (39, 39A, 39B) eingespritzt oder eingegossen ist und/oder die Dichtmasse (41, 41A, 41 B) als Beschichtung auf den Vorsprung (43, 43A, 43B) aufgebracht ist.

6. Flanschprofileset mit wenigstens einem ersten Flanschprofil (3A) nach einem der Ansprüche 1 bis 5, in welchem die zweite Kammerwand (21A) in der Stoßfläche (37) eine in Richtung auf das Innere der Kammer (17) ausgebildete Nut (39) aufweist und wenigstens einem zweiten Flanschprofil (3B) nach einem der Ansprüche 1 bis 5, in welchem die zweite Kammerwand (21 B) in der Stoßfläche (37) eine über die Stoßfläche (37) vorstehenden Vorsprung (43) aufweist, wobei die Abmessungen des Vorsprungs (43) in der zweiten Kammerwand (21B) des zweiten Flanschprofils (3B) derart an die Abmessungen der Nut (39) in der zweiten Kammerwand (21A) des ersten Flanschprofils (3A) angepasst sind, dass der Vorsprung (43) in die Nut (39) eingreift, wenn das erste Flanschprofil (3A) und das zweite Flanschprofil (3B) Stoßfläche an Stoßfläche zueinander angeordnet sind.

7. Flanschprofileset nach Anspruch 6, in dem eine plastisch oder elastisch verformbare Dichtmasse (41) in die die Nut (39) des ersten Flanschprofiles (3A) eingebracht ist und die Abmessungen des über die Stoßfläche vorstehenden Vorsprungs (43) des zweiten Flanschprofils (3B) derart ausgestaltet sind, dass der Vorsprung (43) die Dichtmasse (41) plastisch oder elastisch verformt, wenn er in die Nut (39) in der zweiten Kammerwand (21A) des ersten Flanschprofils (3A) eingreift.

8. Flanschprofileset nach Anspruch 7, in dem die Oberseite des Vorsprungs (43) der zweiten Kammerwand (21A) des zweiten Flanschprofils (3B) mit sich vom ersten Flanschende (7) zum zweiten Flanschende (8) erstreckenden Rippen (45) versehen ist, die über die Oberfläche des Vorsprungs (43) vorstehen und einen sägezahnförmigem Querschnitt aufweisen.

9. Flanschprofileset nach einem der Ansprüche 6 bis 8, in welchem die zweite Kammerwand (21A) des ersten Flanschprofils (3A) in der Stoßfläche (37) sowohl wenigstens einen über die Stoßfläche vorstehenden Vorsprung (43A) als auch wenigstens eine in Richtung auf das Innere der Kammer (17) ausgebildete Nut (39A) aufweist, und die zweite Kammerwand (21B) des zweiten Flanschprofils (3B) in der Stoßfläche (37) sowohl wenigstens einen über die Stoßfläche (37) vorstehenden Vorsprung (43B) als auch wenigstens eine in Richtung auf das Innere der Kammer (17) ausgebildete Nut (39B) aufweist, wobei der Vorsprung (43B) und die Nut (39B) in der Stoßfläche (37) des zweiten Flanschprofiles (3B) derart komplementär zu dem Vorsprung (43A) und der Nut (39A) in der Stoßfläche (37) des ersten Flanschprofils (3A) ausgebildet sind, dass der Vorsprung (43A) in der Stoßfläche (37) des ersten Flanschprofils (3A) in die Nut (39B) in der Stoßfläche (37) des zweiten Flanschprofils (3B) eingreift und der Vorsprung (43B) in der Stoßfläche (37) des zweiten Flanschprofils (3B) in die Nut (39A) in der Stoßfläche des ersten Flanschprofils (3A) eingreift, wenn das erste Flanschprofil (3A) und das zweite Flanschprofil (3B) Stoßfläche an Stoßfläche zueinander angeordnet sind.

10. Flanschprofileset nach Anspruch 6, in dem die Dichtmasse zwei Komponenten (41A, 41B) umfasst, welche bei Kontakt eine stoffschlüssige Verbindung ausbilden, wobei die eine Komponente (41A) der Dichtmasse in die wenigstens eine Nut (39) in der Stoßfläche des ersten Flanschprofils (3A) eingebracht ist und die zweite Komponente (41 B) auf den wenigstens einen Vorsprung (43) in der Stoßfläche des zweiten Flanschprofils (3B) aufgebracht ist.

11. Flanschprofileset nach Anspruch 9, in dem die Dichtmasse zwei Komponenten (41A, 41B) umfasst, welche bei Kontakt eine stoffschlüssige Verbindung ausbilden, wobei die eine Komponente der Dichtmasse (41A) in die wenigstens eine Nut (39A) in der Stoßfläche (37) des ersten Flanschprofils (3A) und die wenigstens eine Nut (3B) in der Stoßfläche (37) des zweiten Flanschprofils (3B) eingebracht ist und die zweite Komponente (41B) auf den wenigstens einen Vorsprung (43A) in der Stoßfläche (37) des ersten Flanschprofils (3A) und den wenigstens einen Vorsprung (43B) in der Stoßfläche (37) des zweiten Flanschprofils (3B) aufgebracht ist.

12. Flanschprofileset nach Anspruch 9, in dem die Dichtmasse zwei Komponenten (41A, 41B) umfasst, welche bei Kontakt eine stoffschlüssige Verbindung ausbilden, wobei die eine Komponente (41A) der Dichtmasse in die wenigstens eine Nut (39A) und auf den wenigstens einen Vorsprung (43A) in der Stoßfläche des ersten Flanschprofils (3A) ein- bzw. aufgebracht ist und die zweite Komponente (41B) der Dichtmasse in die wenigstens eine Nut (39B) und auf den wenigstens einen Vorsprung (43B) in der Stoßfläche (37) des zweiten Flanschprofils (3B) ein- bzw. aufgebracht ist.
